# EUROPEAN PATENT SPECIFICATION

(11) **EP 4 216 347 B1**
(45) Date of publication and mention of the grant of the patent: **04.11.2026**
(21) Application number: 21898513.3
(22) Date of filing: 19.11.2021
(51) Int. Cl.: H01M 50/121, H01M 50/119, H01M 50/136, H01M 50/129, H01M 50/105

(54) **POUCH FILM FOR SECONDARY BATTERY AND MANUFACTURING METHOD THEREOF**
BEUTELFOLIE FÜR SEKUNDÄRBATTERIE UND HERSTELLUNGSVERFAHREN DAFÜR
FILM DE POCHE POUR BATTERIE SECONDAIRE ET SON PROCÉDÉ DE FABRICATION

(30) Priority: 25.11.2020 KR 20200160452
(43) Date of publication of application: 26.07.2023
(73) Proprietor: LG Energy Solution, Ltd., Seoul 07335 (KR)
(72) Inventor: KIM, Yong, Daejeon 34122 (KR)
(74) Representative: Plasseraud IP
(86) International application number: PCT/KR2021/017108
(87) International publication number: WO 2022/114687

(56) References cited:
- JP-A- 2018 187 819
- KR-A- 20140 084 462
- KR-A- 20170 142 624
- KR-A- 20180 019 430
- KR-A- 20200 008 955
- KR-B1- 101 442 854
- US-A1- 2015 050 549
- US-A1- 2015 155 531
- US-A1- 2017 025 647

## Description

### TECHNICAL FIELD

### Cross-reference to Related Applications

This application claims the benefit of Korean Patent Application No. 10-2020-0160452, filed on November 25, 2020, in the Korean Intellectual Property Office.

### Technical Field

The present invention relates to a pouch film for a secondary battery and a method for manufacturing the pouch film, wherein a stretchable auxiliary layer of a multi-layered structure in which a plurality of layers having different elongation rates are bonded is included, so that stress at the interface of each layer is relieved and the moldability of a pouch is improved during pouch molding, and the risk of breakage of a pouch is significantly reduced and defect rates are reduced in a pouch manufacturing process, thereby reducing manufacturing costs.

### BACKGROUND ART

A secondary battery capable of being subject to repeated charging and discharging may be classified into a cylindrical secondary battery, a prismatic secondary battery, a pouch-type secondary battery, and the like according to the structure or manufacturing method thereof. Although a cylindrical battery or a prismatic battery typically using a metal can as an exterior material for a secondary battery has been mainly used, a battery of such a structure has a fixed shape, and thus, is disadvantageous in that the design of an electronic product using the battery as a power source is restricted, and has a difficulty of reducing the volume thereof. Accordingly, the development of a pouch-type secondary battery is actively underway.

A pouch-type secondary battery generally has a structure in which an electrode assembly having a structure in which an electrode and a separator are alternately disposed in a sheet-type pouch case is received, and specifically, the pouch-type secondary battery is largely divided into a lower portion in which a receiving part is formed and an upper portion covering the lower part, and the electrode assembly embedded in the receiving part is formed by laminating a positive electrode, a negative electrode, and a separator. In addition, an electrode tab is drawn out from each electrode, and a tape is attached to a portion of the electrode tab overlapping a sealing portion.

Unlike a cylindrical battery, there are advantages in that a pouch-type secondary battery of the above structure may be relatively easily deformed in shape, and may implement a secondary battery having the same capacity with a smaller volume and mass, but there is a problem in that the pouch-type secondary battery is weak in mechanical strength since a soft pouch is used as a container.

A pouch is manufactured to have a receiving part by drawing-molding a pouch film with a punch and the like, during which process stretching inevitably occurs, and when excessive stretching occurs, the pouch is exposed to a risk of having fine cracks or breakage. In the case of cracks or breakage in the pouch which serves as an exterior material, an electrolyte solution is leaked or reacts with oxygen, so that there is a problem in that the performance of a battery is degraded and the safety thereof cannot be ensured.

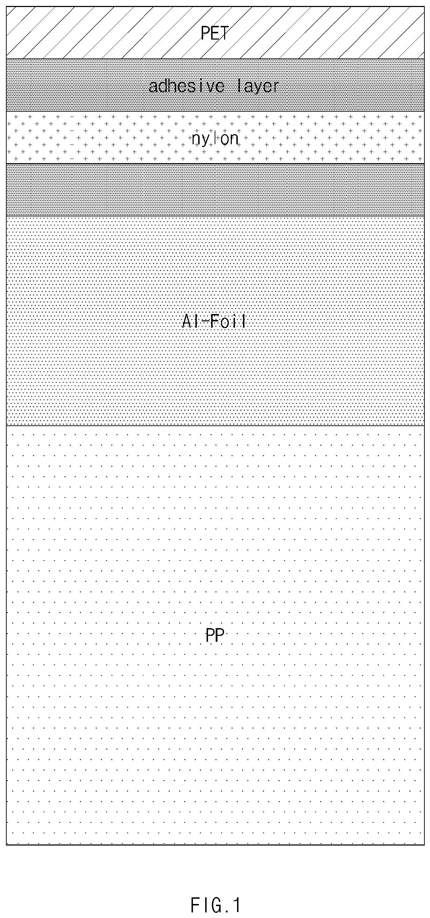

Taking, for example, an aluminum (AL) pouch, a polymer is laminated on both sides of an aluminum foil as illustrated in FIG. 1, and in general, polypropylene (PP) is laminated on the innermost layer, and nylon and polyethylene terephthalate. (PET) are laminated on the outermost layer in order. Here, a nylon layer is for improving the moldability of a pouch, and has a ductility which is about halfway between the ductility of polyethylene terephthalate and the ductility of aluminum, so that the nylon layer is laminated therebetween to serve to relieve stress, thereby preventing upper and lower layers from being easily broken.

However, nylon has a high unit cost, and is easily delaminated when a heat sealing process is performed in a packaging step. Therefore, there is a need for an alternative material or structure which may further reduce cost while providing a layer capable of supplementing the moldability of a pouch, such as a nylon layer.

US2015155531A, JP 2019 119177A, and JP2018187819 relate to pouch film for secondary battery.

### DISCLOSURE OF THE INVENTION

### TECHNICAL PROBLEM

The present invention provides a pouch film for a secondary battery and a method for manufacturing the pouch film, wherein a stretchable auxiliary layer of a multi-layered structure in which a plurality of layers having different elongation rates, with a greater elongation rate as getting closer to the surface protection layer, are bonded is included, so that stress at the interface of each layer is relieved and the moldability of a pouch is improved during pouch molding, and the risk of breakage of a pouch is significantly reduced and defect rates are reduced in a pouch manufacturing process, thereby reducing manufacturing costs.

### TECHNICAL SOLUTION

According to the present invention, there are provided a pouch film for a secondary battery and a method for manufacturing the pouch film, wherein the pouch film for a secondary battery is for manufacturing a pouch-type battery case and includes a sealant layer formed as the innermost layer, a surface protection layer formed as the outermost layer, a gas barrier layer laminated between the sealant layer and the surface protection layer, and a stretchable auxiliary layer laminated between the gas barrier layer and the surface protection layer, and formed by bonding a plurality of layers having different elongation rates.

The stretchable auxiliary layer has a greater elongation rate as getting closer to the surface protection layer.

In the stretchable auxiliary layer, each of the plurality of layers may have an elongation rate of 20% to 130%.

The stretchable auxiliary layer may be composed of a first modification PET layer, and a second modification PET layer bonded to an upper portion of the first modification PET layer, wherein the second modification PET layer may have a greater elongation rate than the first modification PET layer.

The stretchable auxiliary layer may further include a third modification PET layer bonded to an upper portion of the second modification PET layer, wherein the third modification PET layer may have a greater elongation rate than the second modification PET layer.

The first modification PET layer may have an elongation rate of 45% to 55%, the second modification PET layer may have an elongation rate of 65% to 75%, and the third modification PET layer may have an elongation rate of 85% to 95%.

The method for manufacturing a pouch film for a secondary battery of the present invention includes laminating a gas barrier layer on an upper portion of a sealant layer, laminating a stretchable auxiliary layer formed by bonding a plurality of layers having different elongation rates on an upper portion of the gas barrier layer, and laminating a protection layer on an upper portion of the stretchable auxiliary layer.

The laminating of a stretchable auxiliary layer is performed by laminating a stretchable auxiliary layer formed to have a greater elongation rate as getting closer to the surface protection layer.

The laminating of a stretchable auxiliary layer may be laminating a stretchable auxiliary layer in which each of a plurality of layers each has an elongation rate of 20% to 130%.

The laminating of a stretchable auxiliary layer may be laminating a stretchable auxiliary layer in which a second modification PET layer is bonded to an upper portion of a first modification PET layer, and a third modification PET layer is bonded to an upper portion of the second modification PET layer, wherein the third modification PET layer has a greater elongation rate than the second modification PET layer, and the second modification PET layer has a greater elongation rate than the first modification PET layer.

### ADVANTAGEOUS EFFECTS

In a pouch film for a secondary battery and a method for manufacturing the pouch film according to the present invention, the pouch film for a secondary battery is for manufacturing a pouch-type battery case and includes a sealant layer formed as the innermost layer, a surface protection layer formed as the outermost layer, a gas barrier layer laminated between the sealant layer and the surface protection layer, and a stretchable auxiliary layer laminated between the gas barrier layer and the surface protection layer, and formed by bonding a plurality of layers having different elongation rates, so that stress at the interface of each layer may be relieved and the moldability of a pouch may be improved during pouch molding, and the risk of breakage of a pouch may be significantly reduced and defect rates may be reduced in a pouch manufacturing process, thereby reducing manufacturing costs.

### BRIEF DESCRIPTION OF THE DRAWINGS

FIG. 1 is a cross-sectional view illustrating a typical pouch film for a secondary battery.
FIG. 2 is a cross-sectional view illustrating a pouch film for a secondary battery according to Example 1 of the present invention.

### MODE FOR CARRYING OUT THE INVENTION

Hereinafter, preferred embodiments of the present invention will be described in detail with reference to the accompanying drawings so that those skilled in the art to which the present invention pertains may easily practice the embodiments. However, the present invention may be embodied in many different forms, and is not limited or restricted to the embodiments set forth herein.

In order to clearly explain the present invention, parts irrelevant to the description or detailed descriptions of related known technologies that may unnecessarily obscure the gist of the present invention have been omitted, and in the present specification, in adding reference numerals to elements of each drawing herein, the same or similar reference numerals shall be assigned to the same or similar elements throughout the specification.

In addition, it will be understood that words or terms used in the specification and claims of the present invention shall not be construed as being limited to having the meaning defined in commonly used dictionaries. It will be further understood that the words or terms should be interpreted as having meanings that are consistent with their meanings in the context and the technical idea of the invention, based on the principle that an inventor may properly define the meaning of the words or terms to best explain the invention.

### Example 1

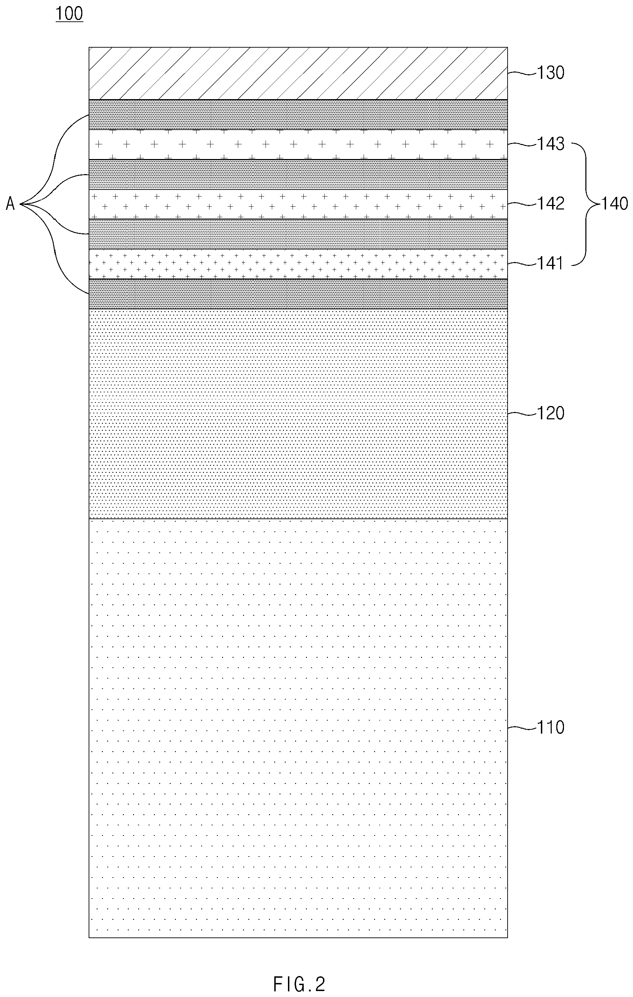

FIG. 1 is a cross-sectional view illustrating a typical pouch film for a secondary battery. FIG. 2 is a cross-sectional view illustrating a pouch film for a secondary battery according to Example 1 of the present invention.

Referring to FIG. 2, a pouch film 100 for a secondary battery according to Example 1 of the present invention includes a sealant layer 110, a surface protection layer 130, a gas barrier layer 120, and a stretchable auxiliary layer 140.

The sealant layer 110 is formed as the innermost layer of the pouch film 100, thereby directly contacting an electrode assembly, and is a layer serving as a sealing material with chemical resistance and thermal adhesion with respect to an electrolyte solution, and is usually formed of a polypropylene (PP)-based resin, and preferably, may be formed of polypropylene (PP).

The surface protection layer 130 is a layer formed as the outermost layer of the pouch film 100, and serves to protect a battery from external impacts, and since the surface protection layer 130 is in direct contact with hardware, the surface protection layer 130 is required to have insulation and heat resistance. The surface protection layer 130 may include, as a material thereof, a single layer of one or a composite layer of two or more selected from polyethylene (PE), polypropylene (PP), polyethylene terephthalate (PET), low-density polyethylene (LDPE), high-density polyethylene (HDPE), and preferably, may be formed of polyethylene terephthalate.

The gas barrier layer 120 is a layer laminated between the sealant layer 110 and the surface protection layer 130, and corresponds to a layer which maintains the mechanical strength of the pouch film 100 and serves as a barrier against moisture and oxygen. The gas barrier layer 120 may be formed of an alloy of iron (Fe), carbon (C), chromium (Cr), and manganese (Mn), an alloy of iron (Fe), carbon (C), chromium (Cr), and nickel (Ni), and preferably, may be formed of aluminum (Al). Aluminum may secure mechanical strength of a predetermined level or above while being light in weight, and may secure chemical resistance and heat dissipation with respect to an electrode assembly and an electrolyte solution.

The stretchable auxiliary layer 140 is laminated between the gas barrier layer 120 and the surface protection layer 130, and has a ductility which is about halfway between the ductility of the gas barrier layer 120 and the ductility of the surface protection layer 130. By providing the stretchable auxiliary layer 140 such as the above, when the pouch film 100 is stretched during a molding process of the pouch film 100, the stretching of the pouch film 100 is assisted so as not to be easily broken.

The stretchable auxiliary layer 140 according to Example 1 of the present invention is formed by bonding a plurality of layers having different elongation rates. That is, since the stretchable auxiliary layer 140 is formed by bonding a plurality of layers having different elongation rates, not formed as a single layer, elongation may be variously configured according to the laminated position of the pouch film 100, and stress may be relieved at the interlayer interface between the gas barrier layer 120 and the surface protection layer 130 to improve the moldability of the pouch film 100.

The pouch film 100 is inevitably stretched in the process of molding a receiving part of a pouch and in the process of using a pouch-type secondary battery, which is a finished product. In this case, stretching occurs in a form in which pressure is applied from the inside of the pouch film 100 toward the outside thereof. Therefore, it is common for the pouch film 100 to have a structure in which a layer having a greater elongation rate is laminated from the innermost layer toward the outermost layer.

In order to correspond to the above, the pouch film 100 for a secondary battery according to Example 1 of the present invention may be formed such that the elongation rate of a plurality of layers constituting the stretchable auxiliary layer 140 increases as getting closer to the surface protection layer 130, through which the elongation rate of the entire pouch film 100 is allowed to increase from the innermost layer toward the outermost layer of the pouch film 100 to have high moldability. The pouch film 100 having such high moldability has a low risk of having cracks or breakage not only during a molding process but also after the molding, which leads to a decrease in pouch defect rate, resulting in a reduction in manufacturing costs.

Each of the plurality of layers may be formed of a modification PET layer having an elongation rate of 20% to 30%. Here, a modification PET layer refers to PET whose elongation rate is modified by subjecting the PET to a physical and chemical change. Since PET is cheaper than nylon, which is mainly utilized as the stretchable auxiliary layer 140, typically, when PET is used as a substitute for nylon by modifying the elongation rate of the PET, it is possible to reduce the cost of the pouch film 100.

To describe the stretchable auxiliary layer 140 composed of a modification PET layer in detail, the stretchable auxiliary layer 140 may be composed of a first modification PET layer 141 and a second modification PET layer 142 bonded to an upper portion of the first modification PET layer 141. At this time, the second modification PET layer 142 may be formed to have a greater elongation rate than the first modification PET layer 141.

In addition, the stretchable auxiliary layer 140 may further includes a third modification PET layer 143 bonded to an upper portion of the second modification PET layer 142, and the third modification PET layer 143 may be formed to have a greater elongation rate than the second modification PET layer 142. Between modification PET layers, an adhesive layer A may be formed to bond between the modification PET layers, and the adhesive layer A may be also formed between the stretchable auxiliary layer 140 and the gas barrier layer 120 and between the stretchable auxiliary layer 140 and the surface protection layer 130 to bond between the layers.

When the stretchable auxiliary layer 140 is formed of a modification PET layer as described above, PET may be variously applied by varying the degree of modification thereof depending on the use of a pouch, and a good-quality pouch with a low risk of breakage may be manufactured by varying the number of layers in which a modification PET layer is applied. In addition, when compared with nylon typically used as the stretchable auxiliary layer 140, delamination occurs relatively less at high temperatures, so that heat sealing may be performed at high temperatures, and as a result, there is an effect of improving processing efficiency.

As described above, each of the plurality of layers forming the stretchable auxiliary layer 140 may have an elongation rate of 20% to 130%, and for example, the first modification PET layer 141 may have an elongation rate of 45% to 55%, the second modification PET layer 142 may have an elongation rate of 65% to 75%, and the third modification PET layer 143 may have an elongation rate of 85% to 95%. The moldability of the entire pouch film 100 may be uniformly secured by allowing each modification PET layer to have an elongation rate of 20% to 130% as described above, while configuring an elongation rate to increase from the first modification PET layer 141 adjacent to the gas barrier layer 120 toward the third modification PET layer 143 adjacent to the surface protection layer 130 with a difference in elongation of a predetermined size or more between the modification PET layers.

### Example 2

FIG. 2 is a cross-sectional view illustrating a pouch film for a secondary battery according to Example 1 of the present invention. Example 2 of the present invention is different from Example 1 in that Example 2 is the invention about a method for manufacturing the pouch film of Example 1.

The contents common to Example 1 will be mostly omitted and Example 2 will be described with a focus on the differences. That is, it is apparent that the contents that are not described in Example 2 may be referred to the contents of Example 1.

Referring to FIG. 2, the method for manufacturing a pouch film for a secondary battery according to Example 2 of the present invention includes laminating the gas barrier layer 120, laminating the stretchable auxiliary layer 140, and laminating the surface protection layer 130.

First, the gas barrier layer 120 is laminated on an upper portion of a sealant layer, and then on an upper portion of the gas barrier layer 120, the stretchable auxiliary layer 140 formed by bonding a plurality of layers having different elongation rates is laminated. At this time, each of the plurality of layers of the stretchable auxiliary layer 140 may have an elongation rate of 20% to 130%, and the stretchable auxiliary layer 140 may be bonded to the upper portion of the gas barrier layer 120 by allowing the elongation rate to increase as getting closer to the surface protection layer 130.

To describe the laminating of the stretchable auxiliary layer 140 in detail, the second modification PET layer 142 may be bonded to an upper portion of the first modification PET layer 141, and the third modification PET layer 143 may be bonded to an upper portion of the second modification PET layer 142. At this time, the stretchable auxiliary layer 140 in which the third modification PET layer 143 is formed to have a greater elongation rate than the second modification PET layer 142, and the second modification PET layer 142 is formed to have a greater elongation rate than the first modification PET layer 141 may be laminated.

When the pouch film 100 is manufactured by including the stretchable auxiliary layer 140 of a multi-layered structure in which a plurality of layers having different elongation rates are bonded, stress at the interface of each layer is relieved and the moldability of a pouch is improved during pouch molding, and the risk of breakage of a pouch is significantly reduced and defect rates are reduced in a pouch manufacturing process, thereby reducing manufacturing costs.

Although the present invention has been described with reference to the preferred embodiments and the drawings, it is to be understood that the invention is not limited thereto, and it is to be understood by those skilled in the art that various changes in form and details may be made therein without departing from the spirit and scope of the invention as defined by the following claims.

### [Description of the Symbols]

- 100:: pouch film
- 110:: The sealant layer
- 120:: gas barrier layer
- 130:: surface protection layer
- 140:: stretchable auxiliary layer
- 141:: first modification PET layer
- 142:: second modification PET layer
- 143:: third modification PET layer
- A:: adhesive layer

## Claims

1. A pouch film (100) for a secondary battery for manufacturing a pouch-type battery case, the pouch film (100) comprising:
a sealant layer (110) formed as the innermost layer;
a surface protection layer (130) formed as the outermost layer;
a gas barrier layer (120) laminated between the sealant layer (110) and the surface protection layer (130); and
a stretchable auxiliary layer (140) laminated between the gas barrier layer (120) and the surface protection layer (130), and formed by bonding a plurality of layers having different elongation rates,
wherein the stretchable auxiliary layer (140) has a greater elongation rate as getting closer to the surface protection layer (130).

2. The pouch film of claim 1, wherein, in the stretchable auxiliary layer (140), each of the plurality of layers has an elongation rate of 20% to 130%.

3. The pouch film of claim 1, wherein the stretchable auxiliary layer (140) is composed of:
a first modification PET layer (141); and
a second modification PET layer (142) bonded to an upper portion of the first modification PET layer (141), wherein the second modification PET layer (142) has a greater elongation rate than the first modification PET layer (141).

4. The pouch film (100) of claim 3, wherein the stretchable auxiliary layer (140) further comprises a third modification PET layer (143) bonded to an upper portion of the second modification PET layer (142), wherein the third modification PET layer (143) has a greater elongation rate than the second modification PET layer (142).

5. The pouch film (100) of claim 4, wherein:
the first modification PET (141) layer has an elongation rate of 45% to 55%;
the second modification PET layer (142) has an elongation rate of 65% to 75%; and
the third modification PET layer (143) has an elongation rate of 85% to 95%.

6. A method for manufacturing a pouch film (100) for a secondary battery, the method comprising:
laminating a gas barrier layer (120) on an upper portion of a sealant layer (110);
laminating a stretchable auxiliary layer (140) formed by bonding a plurality of layers having different elongation rates on an upper portion of the gas barrier layer (120); and
laminating a protection layer on an upper portion of the stretchable auxiliary layer (140),
wherein the laminating of a stretchable auxiliary layer (140) is performed by laminating a stretchable auxiliary layer (140) formed to have a greater elongation rate as getting closer to the surface protection layer (130).

7. The method of claim 6, wherein the laminating of a stretchable auxiliary layer (140) is performed by laminating a stretchable auxiliary layer (140) in which each of a plurality of layers has an elongation rate of 20% to 130%.

8. The method of claim 6, wherein the laminating of a stretchable auxiliary layer (140) is performed by laminating a stretchable auxiliary layer (140) in which a second modification PET layer (142) is bonded to an upper portion of a first modification PET layer (141), and a third modification PET layer (142) is bonded to an upper portion of the second modification PET layer (142), wherein the third modification PET layer (143) has a greater elongation rate than the second modification PET layer (142), and the second modification PET layer (142) has a greater elongation rate than the first modification PET layer (141).

## Patentansprüche

1. Beutelfolie (100) für eine Sekundärbatterie zur Herstellung eines beutelartigen Batteriegehäuses, wobei die Beutelfolie (100) Folgendes umfasst:
• eine Dichtungsschicht (110), die als die innerste Schicht ausgebildet ist;
• eine Oberflächenschutzschicht (130), die als die äußerste Schicht ausgebildet ist;
• eine Gassperrschicht (120), die zwischen der Dichtungsschicht (110) und der Oberflächenschutzschicht (130) laminiert ist; und
• eine dehnbare Hilfsschicht (140), die zwischen der Gassperrschicht (120) und der Oberflächenschutzschicht (130) laminiert und durch Verbinden einer Vielzahl von Schichten mit unterschiedlichen Dehnungsraten ausgebildet ist,
• wobei die dehnbare Hilfsschicht (140) eine größere Dehnungsrate aufweist, je näher sie der Oberflächenschutzschicht (130) kommt.

2. Beutelfolie nach Anspruch 1, wobei in der dehnbaren Hilfsschicht (140) jede der Vielzahl von Schichten eine Dehnungsrate von 20 % bis 130 % aufweist.

3. Beutelfolie nach Anspruch 1, wobei die dehnbare Hilfsschicht (140) aus Folgendem besteht:
• einer ersten Modifikations-PET-Schicht (141); und
• einer zweiten Modifikations-PET-Schicht (142), die an einen oberen Abschnitt der ersten Modifikations-PET-Schicht (141) gebunden ist,
• wobei die zweite Modifikations-PET-Schicht (142) eine größere Dehnungsrate als die erste Modifikations-PET-Schicht (141) aufweist.

4. Beutelfolie (100) nach Anspruch 3, wobei die dehnbare Hilfsschicht (140) ferner eine dritte Modifikations-PET-Schicht (143) umfasst, die an einen oberen Abschnitt der zweiten Modifikations-PET-Schicht (142) gebunden ist, wobei die dritte Modifikations-PET-Schicht (143) eine größere Dehnungsrate als die zweite Modifikations-PET-Schicht (142) aufweist.

5. Beutelfolie (100) nach Anspruch 4, wobei:
• die erste Modifikations-PET-Schicht (141) eine Dehnungsrate von 45 % bis 55 % aufweist;
• die zweite Modifikations-PET-Schicht (142) eine Dehnungsrate von 65 % bis 75 % aufweist; und
• die dritte Modifikations-PET-Schicht (143) eine Dehnungsrate von 85 % bis 95 % aufweist.

6. Verfahren zur Herstellung einer Beutelfolie (100) für eine Sekundärbatterie, wobei das Verfahren Folgendes umfasst:
• Laminieren einer Gassperrschicht (120) auf einen oberen Abschnitt einer Dichtungsschicht (110);
• Laminieren einer dehnbaren Hilfsschicht (140), die durch Verbinden einer Vielzahl von Schichten mit unterschiedlichen Dehnungsraten ausgebildet ist, auf einen oberen Abschnitt der Gassperrschicht (120); und
• Laminieren einer Schutzschicht auf einen oberen Abschnitt der dehnbaren Hilfsschicht (140),
• wobei das Laminieren einer dehnbaren Hilfsschicht (140) durch Laminieren einer dehnbaren Hilfsschicht (140) durchgeführt wird, die so ausgebildet ist, dass sie eine größere Dehnungsrate aufweist, je näher sie der Oberflächenschutzschicht (130) kommt.

7. Verfahren nach Anspruch 6, wobei das Laminieren einer dehnbaren Hilfsschicht (140) durch Laminieren einer dehnbaren Hilfsschicht (140) durchgeführt wird, bei der jede einer Vielzahl von Schichten eine Dehnungsrate von 20 % bis 130 % aufweist.

8. Verfahren nach Anspruch 6, wobei das Laminieren einer dehnbaren Hilfsschicht (140) durch Laminieren einer dehnbaren Hilfsschicht (140) durchgeführt wird, bei der eine zweite Modifikations-PET-Schicht (142) an einen oberen Abschnitt einer ersten Modifikations-PET-Schicht (141) gebunden ist und eine dritte Modifikations-PET-Schicht (143) an einen oberen Abschnitt der zweiten Modifikations-PET-Schicht (142) gebunden ist, wobei die dritte Modifikations-PET-Schicht (143) eine größere Dehnungsrate als die zweite Modifikations-PET-Schicht (142) aufweist und die zweite Modifikations-PET-Schicht (142) eine größere Dehnungsrate als die erste Modifikations-PET-Schicht (141) aufweist.

## Revendications

1. Film de poche (100) pour batterie secondaire pour la fabrication d'un boîtier de batterie de type poche, le film de poche (100) comprenant :
• une couche d'étanchéité (110) formée en tant que couche la plus interne ;
• une couche de protection de surface (130) formée en tant que couche la plus externe ;
• une couche barrière aux gaz (120) stratifiée entre la couche d'étanchéité (110) et la couche de protection de surface (130) ; et
• une couche auxiliaire étirable (140) stratifiée entre la couche barrière aux gaz (120) et la couche de protection de surface (130), et formée par liaison d'une pluralité de couches ayant des taux d'allongement différents,
• dans lequel la couche auxiliaire étirable (140) présente un taux d'allongement plus grand à mesure qu'elle se rapproche de la couche de protection de surface (130).

2. Film de poche selon la revendication 1, dans lequel, dans la couche auxiliaire étirable (140), chacune de la pluralité de couches présente un taux d'allongement de 20 % à 130 %.

3. Film de poche selon la revendication 1, dans lequel la couche auxiliaire étirable (140) est composée de :
• une première couche de PET modifié (141) ; et
• une deuxième couche de PET modifié (142) liée à une partie supérieure de la première couche de PET modifié (141),
• dans lequel la deuxième couche de PET modifié (142) présente un taux d'allongement plus grand que la première couche de PET modifié (141).

4. Film de poche (100) selon la revendication 3, dans lequel la couche auxiliaire étirable (140) comprend en outre une troisième couche de PET modifié (143) liée à une partie supérieure de la deuxième couche de PET modifié (142), dans lequel la troisième couche de PET modifié (143) présente un taux d'allongement plus grand que la deuxième couche de PET modifié (142).

5. Film de poche (100) selon la revendication 4, dans lequel :
• la première couche de PET modifié (141) présente un taux d'allongement de 45 % à 55 % ;
• la deuxième couche de PET modifié (142) présente un taux d'allongement de 65 % à 75 % ; et
• la troisième couche de PET modifié (143) présente un taux d'allongement de 85 % à 95 %.

6. Procédé de fabrication d'un film de poche (100) pour batterie secondaire, le procédé comprenant :
• la stratification d'une couche barrière aux gaz (120) sur une partie supérieure d'une couche d'étanchéité (110) ;
• la stratification d'une couche auxiliaire étirable (140) formée par liaison d'une pluralité de couches ayant des taux d'allongement différents sur une partie supérieure de la couche barrière aux gaz (120) ; et
• la stratification d'une couche de protection sur une partie supérieure de la couche auxiliaire étirable (140),
• dans lequel la stratification d'une couche auxiliaire étirable (140) est effectuée en stratifiant une couche auxiliaire étirable (140) formée de manière à présenter un taux d'allongement plus grand à mesure qu'elle se rapproche de la couche de protection de surface (130).

7. Procédé selon la revendication 6, dans lequel la stratification d'une couche auxiliaire étirable (140) est effectuée en stratifiant une couche auxiliaire étirable (140) dans laquelle chacune d'une pluralité de couches présente un taux d'allongement de 20 % à 130 %.

8. Procédé selon la revendication 6, dans lequel la stratification d'une couche auxiliaire étirable (140) est effectuée en stratifiant une couche auxiliaire étirable (140) dans laquelle une deuxième couche de PET modifié (142) est liée à une partie supérieure d'une première couche de PET modifié (141), et une troisième couche de PET modifié (143) est liée à une partie supérieure de la deuxième couche de PET modifié (142), dans lequel la troisième couche de PET modifié (143) présente un taux d'allongement plus grand que la deuxième couche de PET modifié (142), et la deuxième couche de PET modifié (142) présente un taux d'allongement plus grand que la première couche de PET modifié (141).
